# EUROPÄISCHE PATENTANMELDUNG

(11) **EP 1 892 941 A1**
(43) Veröffentlichungstag der Anmeldung: **27.02.2008**
(21) Anmeldenummer: 07016371.2
(22) Anmeldetag: 21.08.2007
(51) Int. Cl.: H04N 1/00

(54) **System zum Übermitteln von Bildern an ein Fotolabor mittels eines Mobiltelefons**

(30) Priorität: 22.08.2006 DE 102006039262
(71) Anmelder: Mobile2gate solutions GmbH, 37327 Leinefelde-Worbis (DE)
(72) Erfinder: Siernicki, Oliver, 30177 Hannover (DE); Vosseberg, Thomas, 37327 Leinefelde (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein System zum Übermitteln von Bildern an ein Fotolabor mittels eines Mobiltelefons. Bei dem erfindungsgemäßen System ist ein Serversystem vorgesehen, das für jedes Mobiltelefon über das Mobilfunknetz mittels eines vorgegebenen Übertragungsprotokolls drahtlos erreichbar ist, wobei das Serversystem für jeden an das System angemeldeten Benutzer eine eindeutige Identifikation in einer Datenbank speichert. Für jedes Mobiltelefon sind ferner eine Auswahleinrichtung, mittels der an das Serversystem unter der jeweils zugeordneten Identifikation zu sendende Bilder bei gleichzeitiger Einstellung eines jeweiligen Druckformats und einer Druckanzahl auswählbar sind, sowie eine Freigabeeinrichtung vorgesehen, mittels der an das Serversystem gesendete Bilder als Druckauftrag freigebbar sind. Das Serversystem leitet die jeweils empfangenen Druckaufträge an das Fotolabor weiter.

## Beschreibung

Die vorliegende Erfindung betrifft ein System gemäß der im Anspruch 1 angegebenen Art, das zum Übermitteln von Bildern an ein Fotolabor mittels eines Mobiltelefons vorgesehen ist.

Mobiltelefone (Handys) der neueren Generation bieten in der Regel die Möglichkeit, mittels einer eingebauten Kamera Bilder in elektronischer Form aufzunehmen und als Datei zu speichern. Die Speicherung erfolgt dabei normalerweise auf dem im Mobiltelefon installierten Speicher; ggf. kann aber auch die Datenbank des Netzbetreibers zum Speichern der Bilder herangezogen werden. Schließlich ist es auch möglich, einen Computer (PC) oder einen PDA (Personal Digital Assistant) an das Mobiltelefon anzuschließen (z.B. über eine drahtlose Bluetooth-Verbindung oder über eine Infrarot-Schnittstelle) und die aufgenommenen Bilder auf dessen Dateisystem zu speichern bzw. dort gespeicherte Bilder wieder auf das Mobiltelefon zurück zu übertragen.

Die in derartige Mobiltelefone integrierten Kameras bieten zwar selten die Aufnahmequalität eines digitalen Fotoapparats, haben jedoch den unschätzbaren Vorteil der besseren Verfügbarkeit, da die Mitnahme eines Mobiltelefons heutzutage fast selbstverständlich ist. Demgemäß gelingt gerade mit den in Mobiltelefonen integrierten Kameras mancher Schnappschuss, der für einen späteren Ausdruck als Foto wert erscheint. In einem solchen Fall muss der Benutzer das Mobiltelefon in der oben geschilderten Weise mit einem Computer verbinden, die gewünschten Bilder übertragen, auf einem Speichermedium wie etwa einer Compact-Disc (CD) speichern und diese schließlich an ein Fotolabor senden oder dorthin bringen; alternativ besteht auch die Möglichkeit, die Bilddateien über das Internet an solche Fotolabors zu senden, die über ein geeignetes Portal verfügen. Eine weitere Möglichkeit besteht zwar darin, die Bilder über einen eigenen Drucker auszudrucken, jedoch ist mit solchen Druckern nicht die Wiedergabequalität eines professionellen Fotolabors erzielbar.

Wohl wegen des geschilderten Aufwands werden über Mobiltelefone aufgenommene Bilder derzeit nur selten als Hardcopy ausgedruckt bzw. als Foto in einem klassischen Album in hoher Qualität archiviert.

Der Erfindung liegt demgemäß die Aufgabe zugrunde, den Ausdruck von über ein Mobiltelefon aufgenommenen Bildern als Foto unter Beibehaltung der größtmöglichen Druckqualität wesentlich zu vereinfachen.

Diese Aufgabe wird erfindungsgemäß mit den im Anspruch 1 angegebenen Maßnahmen gelöst.

Mit der Erfindung wird erreicht, dass der Ausdruck von Fotos in überaus einfacher Weise möglich ist; darüber hinaus sind hierzu nur wenige Tastendrücke seitens des Benutzers erforderlich und die erzielte Druckqualität ist sehr hoch. Das Fotolabor, dem die zu druckenden Bilder mit dem erfindungsgemäßen System übermittelt werden, versendet die jeweiligen Bilder schließlich entsprechend den Vorgaben des Benutzers (Kunden) per Post, so dass keinerlei zusätzlicher Aufwand seitens des Benutzers erforderlich ist.

Vorteilhafte Weiterbildungen der Erfindung sind Gegenstand der Unteransprüche.

Die Erfindung wird nachstehend anhand der Beschreibung eines Ausführungsbeispiels unter Bezugnahme auf die Zeichnung näher erläutert. Es zeigen:
Fig.1 eine im Display des Mobiltelefons angezeigte Übersicht von zu druckenden Bildern;
Fig.2 die Übersicht der Fig1. mit einem eingeblendeten Auswahlmenu;
Fig.3 einen Eingabedialog zur Eingabe der Daten des gewünschten Ausdrucks für ein gewähltes Bild;
Fig.4 ein Bild in vergrößerter Darstellung; und
Fig.5 eine schematische Darstellung der Funktionsblöcke des erfindungsgemäßen Systems.

Das erfindungsgemäße System besteht aus einem Serversystem, das für jedes Mobiltelefon über das Mobilfunknetz mittels eines vorgegebenen Übertragungsprotokolls drahtlos erreichbar ist, sowie seitens jedes Mobiltelefons aus einer Auswahleinrichtung und einer Freigabeeinrichtung für die Druckaufträge. Diese beiden Einrichtungen des Mobiltelefons sind im Ausführungsbeispiel jeweils durch eine geeignete Softwarekomponente (Applikation) realisiert und werden nun näher erläutert.

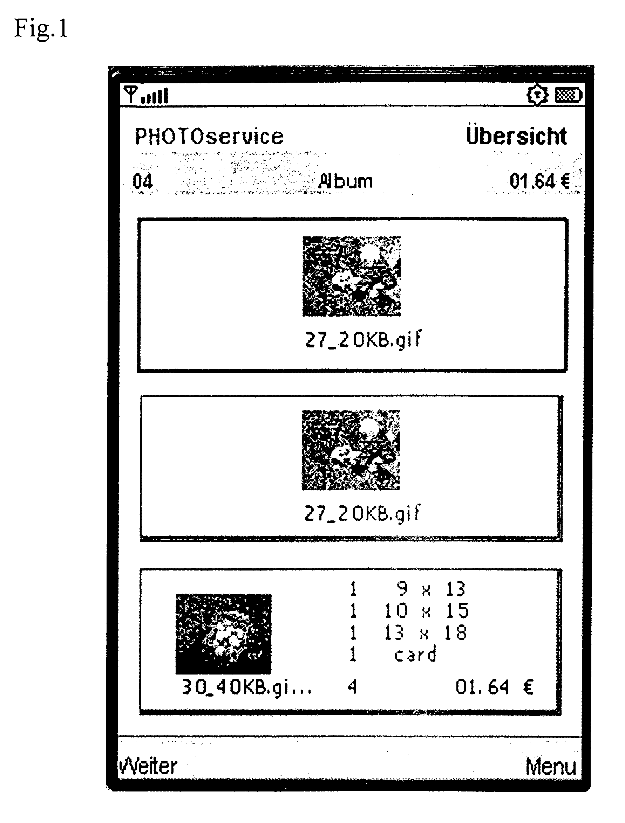

Wenn als Mobiltelefone beispielsweise MIDP-2.0 Handys vorgesehenen werden, so erfüllen diese als Mindestvorrausetzung die JSR-75 Java-Eigenschaften, d.h. File-Connection (Dateiverbindung) und PIM. Beim Start der erfindungsgemäßen Applikation (nachfolgend auch als Mobiltelefon- oder Client-Applikation bezeichnet) wird zunächst geprüft, ob bereits eine systemweite, eindeutige ID vergeben wurde. Ist dies nicht der Fall, kann sich der Benutzer bzw. Kunde zunächst über die Client-Applikation per HTTP beim erfindungsgemäßen Server registrieren. Eine Gültigkeitsprüfung bzw. Validierung der Eingabefelder in der Client-Applikation erfolgt zunächst nur in der Form, dass die Eingabefelder nicht leer sein dürfen. Nach erfolgreichem Abschluss des Vorganges erhält die Client-Applikation eine eindeutige ID für die Kommunikation mit dem Server, welche auch lokal gespeichert werden muss. Eine spätere Registrierung sollte dem User ermöglicht werden. Anschließend kann der Benutzer einen vorgegebenen, aber veränderbaren Pfad für sein Bilderverzeichnis auswählen. Alle Bilder in diesem Verzeichnis werden automatisch im Fotoalbum gespeichert und angezeigt (vergleiche Fig.1).

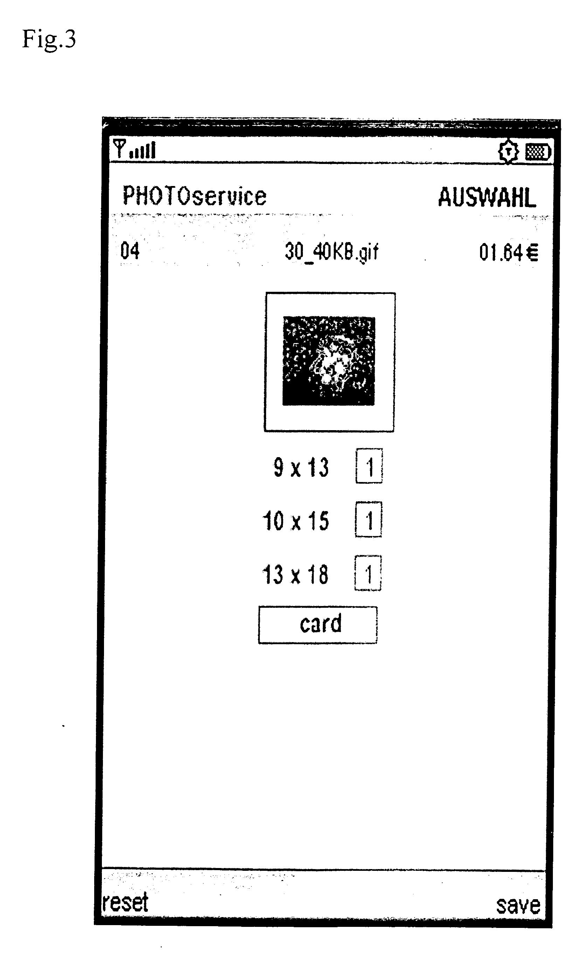

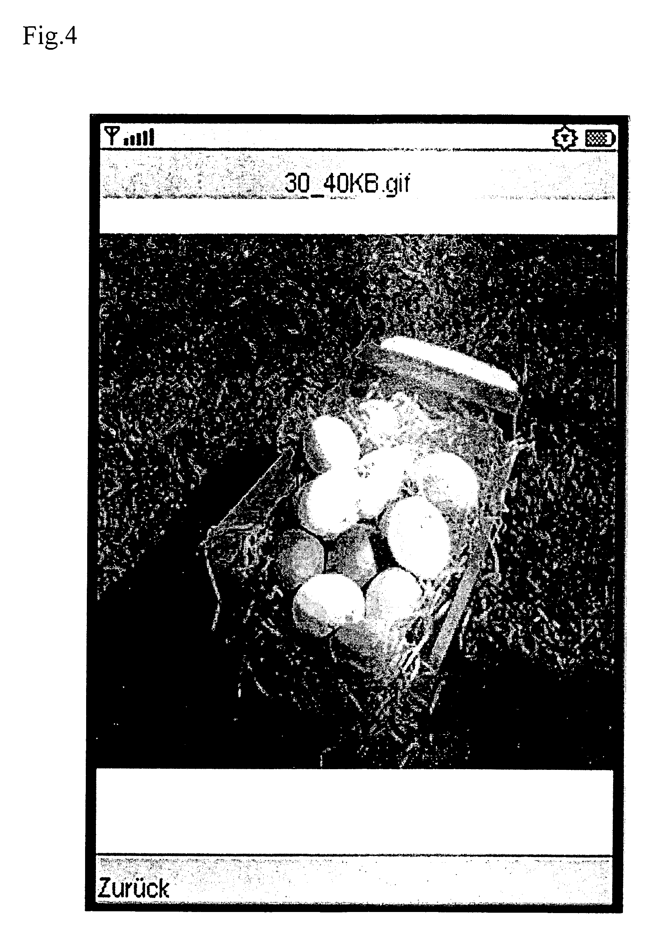

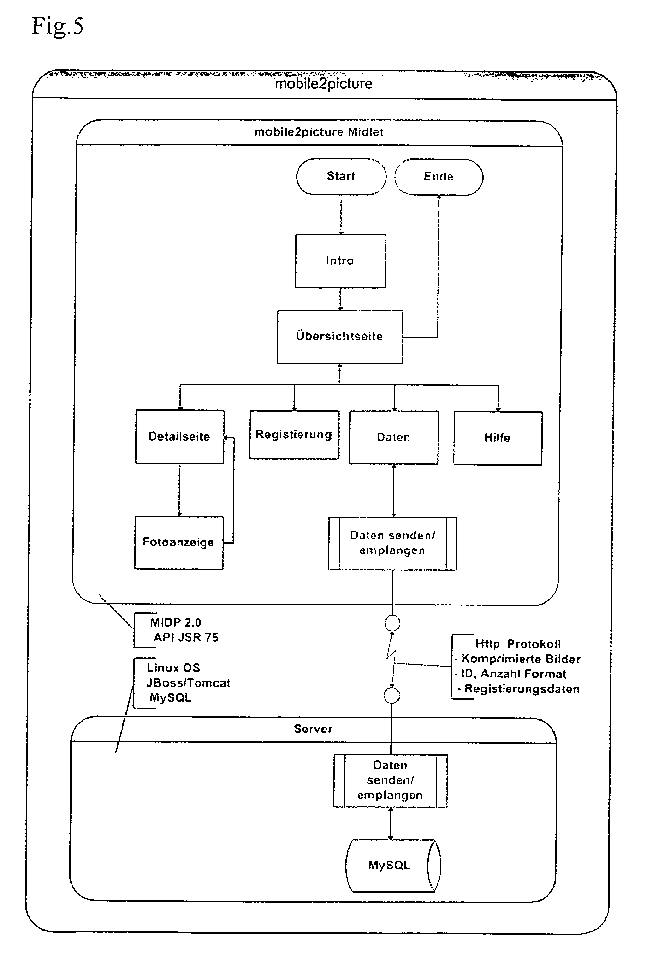

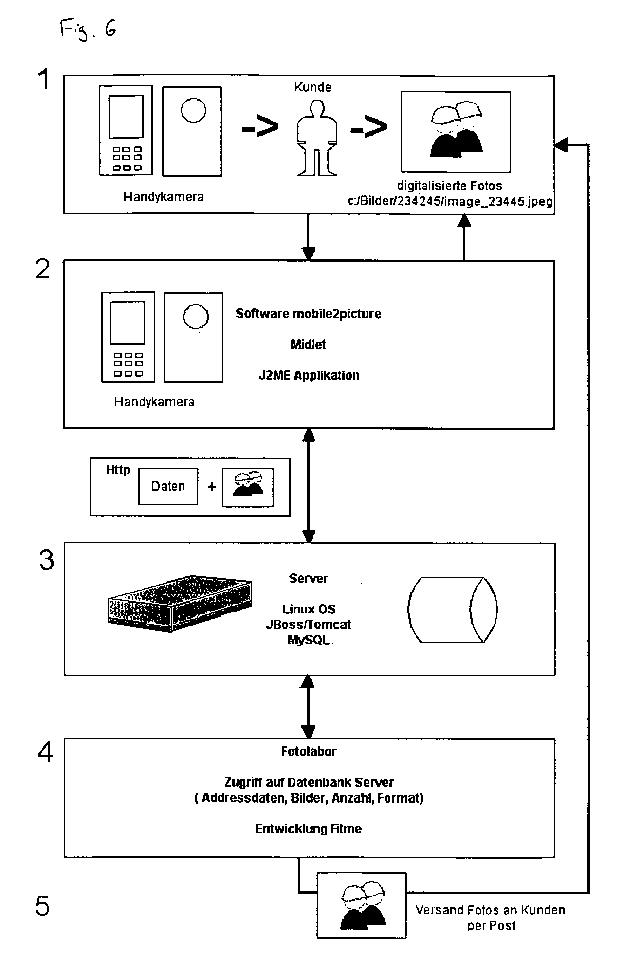

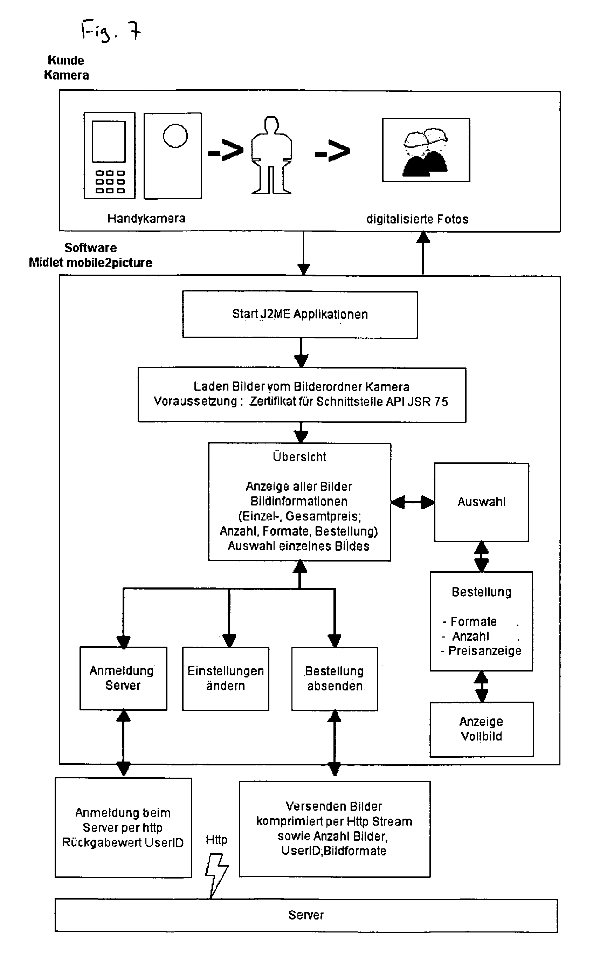

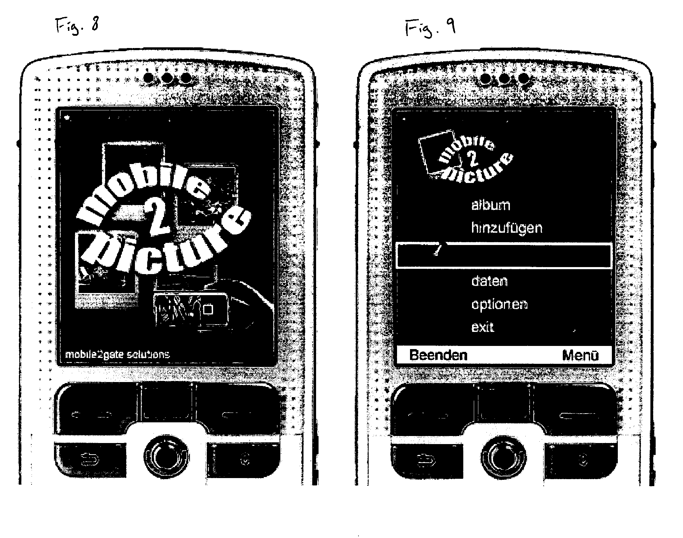

Um einen benutzerfreundlichen Zugriff auf das Dateisystem ohne Sicherheits-Meldungen zu erhalten, ist eine Zertifizierung für die ausgewählten Handytypen vorzusehen. Zu einem späteren Zeitpunkt kann der Benutzer dann ein Bild auswählen sowie Format und Anzahl einstellen (siehe Fig.3). Die Auswahl der Formate kann durch Setzen des Fokus erfolgen, während die Anzahl direkt durch die Nummerntasten 0-9 oder stufenweise von 0 bis 9 eingestellt werden kann. Durch eine weitere Auswahl über das angezeigte Bild kann der Benutzer auf einer Detailseite das ausgewählte Bild in voller Displaygrösse angezeigt bekommen. Im Fotoalbum der Übersichtseite sollten die Bilder in gleicher Größe angezeigt werden, und zwar auch bei Bildern, deren Größe die volle Kameraauflösung betragen kann. Die Preise zur Herstellung von Fotoabzügen für die gewählten Formate werden zunächst fest in der Client-Applikation gespeichert. Zeitaufwändige Vorgänge bei der Bearbeitung und Anzeige sollten durch Nutzung eines Fortschrittsbalkens dem Benutzer verdeutlicht werden.

Das Album sollte lokal gespeichert werden, um einen schnellen Zugriff auf alle Daten zu ermöglichen. Bei der Anzeige der Bilder in der Übersichtseite kann die Anzahl der angezeigten Bilder bis auf 3 (wegen des HEAP-Speichers) begrenzt werden. Der Kunde kann die Daten in der Übersichtseite ändern, speichern oder löschen.

Intern speichert die Client-Applikation die Zeit der Erstellung des Bildes (Timestamp) ab und sortiert diese so, dass die aktuellen Bilder am Anfang der Übersichtseite stehen.

Das Senden der Bilder erfolgt in einem eigenen Prozess (Thread) und bildweise, wobei ID, Anzahl, Format, Zeit und Erfolg der Übermittlung gesendet werden. Gleichzeitig erfolgt eine lokale Speicherung der übermittelten Daten. Anschließend erhält der Benutzer eine Zusammenfassung der gesendeten Daten (Gesamtanzahl Bilder, Gesamtkosten etc.). Durch eine erneute Freigabe des Benutzers wird der Auftrag gestartet.

Sollte der Benutzer bzw. Kunde noch nicht angemeldet sein, erscheint automatisch eine Anmeldeseite (hier nicht dargestellt). Die Registrierung erfolgt hierbei in Form einer Kundenadresse (bestehend aus Name, Vorname, Postleitzahl, Strasse, und Passwort) und/oder als Lieferadresse (bestehend aus Name, Vorname, Postleitzahl und Strasse).

Gemäß der Darstellung in Fig. 1 ist eine Übersichtsseite der erfindungsgemäßen Client-Applikation wie folgt gestaltet:
a) Überschrift "PHOTOservice Übersicht"
b) Überschrift "Gesamtanzahl Album Gesamtpreis"
c) Bild
   - Auswahl Bild nicht erfolgt: - verkleinertes Bild in der Mitte
   - Auswahl Bild erfolgt:
      - verkleinertes Bild links
      - Formate rechts neben dem Bild ( siehe Bild )
      - auf Höhe des Bildnamens Gesamtanzahl und Gesamtpreis
d) jeweils unter dem Bild der Bildname.

Das ausgewählte Bild besitzt beispielsweise einen roten Auswahlrahmen, wobei das aktuelle Bild im oberen Drittel gehalten werden sollte. Es werden max. 3-5 Bildern angezeigt, eine weitere Auswahl soll über die Bedienungstasten erfolgen (hier nicht dargestellt).

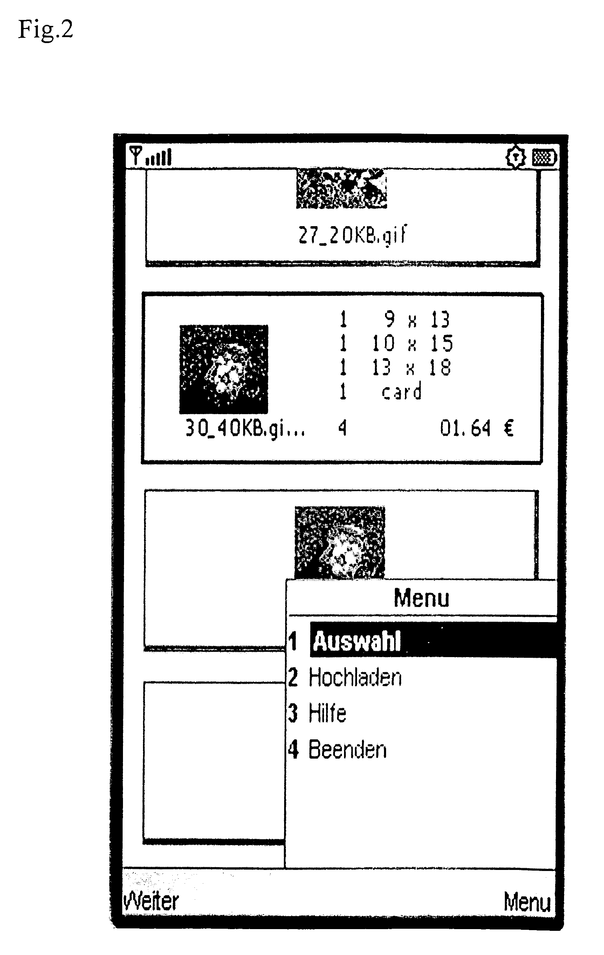

Ein gemäß Fig.2 in die Übersichtsseite einblendbares Menu ermöglicht den Zugang zu weiteren Funktion der Client-Applikation. Zur Änderung der Anschrift muss ein eine weitere Auswahl in diesem Menu ergänzt werden (hier nicht dargestellt). Sollte noch keine Auswahl erfolgt sein, darf die Anzeige von Gesamtanzahl und Gesamtkosten nicht sichtbar sein.

Fig.3 zeigt diejenige Übersichtsseite, die die erfindungsgemäße Auswahleinrichtung darstellt. Diese enthält folgende Details:
a) Überschrift "PHOTOservice Auswahl"
b) Überschrift "Gesamtanzahl Bildname Gesamtpreis"
c) Bildanzeige mittig
d) Formate mit Auswahl
   - 9x13 Anzahl 0 -9
   - 10x15 Anzahl 0 -9
   - 13x16 Anzahl 0 -9
   - card Anzahl 0 oder 1

Sollte noch keine Auswahl erfolgt sein, darf die Anzeige von Gesamtanzahl und Gesamtkosten nicht sichtbar sein. Bei Auswahl eines Bildes wird dieses Bild in Originalgröße sowie mit seinem Namen angezeigt, wie dies in Fig.4 gezeigt ist.

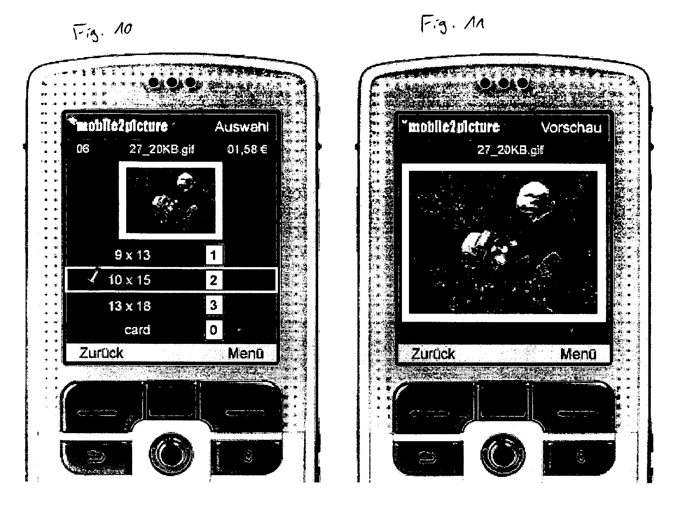

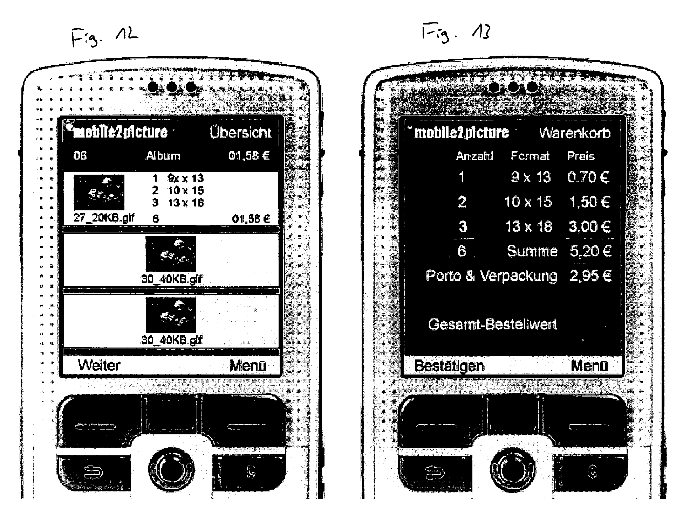

Bezüglich weiterer Details der erfindungsgemäßen Client-Applikation wird im übrigen auf den oberen Block der schematischen Darstellung der Fig.5 verwiesen.

Nachfolgend wird unter Bezugnahme auf den unteren Block der schematischen Darstellung der Fig.5 die Struktur des erfindungsgemäßen Servers bzw. der auf diesem installierten Applikation näher erläutert.

Nach Betätigung eines vorgegebenen Menupunkts werden die vom Benutzer ausgewählten Bilder mittels des HTTP-Protokolls auf den erfindungsgemäßen Server übertragen. Bei diesem Vorgang wird vorzugsweise eine Komprimierung vorgesehen, um die Ladezeiten möglichst niedrig zu halten, wobei eine Mindestqualität erhalten bleiben sollte. Die vorgesehene Server-Applikation nutzt z.B. ein Linux-Betriebssystem mit einem Java-Applikationsserver (JBoss /Tomcat) unter Nutzung der Datenbank MySQL zur Datenspeicherung. Die Server-Applikation kann ausschließlich für die Interaktion mit der erfindungsgemäßen Client-Applikation vorgesehen sein, möglicherweise aber auch andere Aufgaben übernehmen.

Die Server-Applikation hat unter anderem die Aufgaben, neue Teilnehmer mit Namen, Adresse etc. zu registrieren und in Rücksprache mit dem jeweiligen Client eine systemweit eindeutige ID zu generieren. Bei allen weiteren Anfragen erfolgt die Identifikation des jeweiligen Benutzers über die gesendete ID. Die Server-Applikation nimmt von den Mobilfunkteilnehmern (Clients) die einzelnen Bilder per HTTP entgegen und speichert diese und weitere Daten in einer Datenbank für den jeweiligen Benutzer ab. Es gibt zunächst immer nur genau einen Auftrag pro Benutzer, der durch die Übertragung zusätzlicher Bilder erweitert wird. Zum Abschluss des Auftrags nimmt die Server-Applikation Freigabe oder Löschwünsche entgegen.

Wenn der Benutzer den Auftrag löscht, werden sämtliche hierzu gehörenden Daten aus der Datenbank entfernt. Wenn die Freigabe durch den Benutzer erfolgt, gibt die Serverf-Applikation den gesamten Auftrag über eine zur Verfügung gestellte Schnittstelle an das Fotolabor weiter. Dieses stellt dann die Bilder her und sendet sie dann unter Rechnungsstellung dem betreffenden Kunden zu.

Die Server-Applikation muss natürlich der zu erwartenden Last entsprechend ausgelegt werden und die Bereiche "Registrieren", "Bildannahme", "Freigabe/Löschen" und "Labor" bedienen können. Es wird davon ausgegangen, dass die Rechnungsstellung vom Fotolabor vorgenommen wird.

## Patentansprüche

1. System zum Übermitteln von Bildern an ein Fotolabor mittels eines Mobiltelefons, **dadurch gekennzeichnet, dass**
ein Serversystem vorgesehen ist, das für jedes Mobiltelefon über das Mobilfunknetz mittels eines vorgegebenen Übertragungsprotokolls drahtlos erreichbar ist, wobei das Serversystem für jeden an das System angemeldeten Benutzer eine eindeutige Identifikation in einer Datenbank speichert;
dass für jedes Mobiltelefon eine Auswahleinrichtung (Fig.3), mittels der an das Serversystem unter der jeweils zugeordneten Identifikation zu sendende Bilder bei gleichzeitiger Einstellung eines jeweiligen Druckformats und einer Druckanzahl auswählbar sind,
sowie eine Freigabeeinrichtung vorgesehen sind, mittels der an das Serversystem gesendete Bilder als Druckauftrag freigebbar sind;
und dass das Serversystem die jeweils empfangenen Druckaufträge an das Fotolabor weiterleitet.

2. System nach Anspruch 1, **dadurch gekennzeichnet, dass** die Auswahleinrichtung des Mobiltelefons die Herstellungskosten für jedes einzelne Bild des Druckauftrags sowie die Gesamtkosten des Druckauftrags anzeigt.

3. System nach Anspruch 1 oder 2, **dadurch gekennzeichnet, dass** die mittels der Auswahleinrichtung auswählbaren Bilder auf dem Mobiltelefon gespeichert sind.

4. System nach einem der Ansprüche 1 bis 3, **dadurch gekennzeichnet, dass** die mittels der Auswahleinrichtung auswählbaren Bilder mittels einer in das Mobiltelefon integrierten Kamera aufnehmbar sind.

5. System nach einem der Ansprüche 1 bis 4, **dadurch gekennzeichnet, dass** das Serversystem für jeden an das System angemeldeten Benutzer neben der eindeutigen Identifikation Adressdaten und/oder Lieferadressdaten in der Datenbank speichert, die zum Zustellen der fertigen Bilder dienen und über das Mobiltelefon eingebbar und auf das Serversystem übertragbar sind.

6. System nach einem der Ansprüche 1 bis 5, **dadurch gekennzeichnet, dass** sich jedes registrierte Mobiltelefon bei jedem Zugriff auf das Serversystem über die zugeordnete Identifikation identifiziert.

7. System nach einem der Ansprüche 1 bis 6, **dadurch gekennzeichnet, dass** die Übertragung der Daten vom Mobiltelefon zum Serversystem mittels HTTP, vorzugsweise in komprimierter Form erfolgt.
